(19) Europäisches Patentamt
European Patent Office
Office européen des brevets

(11) **EP 2 924 303 B1**

(12) **EUROPEAN PATENT SPECIFICATION**

(45) Date of publication and mention
of the grant of the patent:
**22.05.2019 Bulletin 2019/21**

(21) Application number: **13857368.8**

(22) Date of filing: **21.03.2013**

(51) Int Cl.:
*F16B 37/00* *(2006.01)*      *F16B 39/00* *(2006.01)*
*F16B 35/00* *(2006.01)*

(86) International application number:
**PCT/JP2013/058150**

(87) International publication number:
**WO 2014/080645 (30.05.2014 Gazette 2014/22)**

(54) **GROUNDING NUT**

ERDUNGSMUTTER

ÉCROU DE MISE À LA TERRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.11.2012 JP 2012256373**

(43) Date of publication of application:
**30.09.2015 Bulletin 2015/40**

(73) Proprietor: **Iwata Bolt Co., Ltd.**
**Tokyo 141-8508 (JP)**

(72) Inventors:
• **SUZUKI Nobuhide**
**Tokyo 141-8508 (JP)**
• **TASAKA Kenta**
**Tokyo 141-8508 (JP)**

(74) Representative: **Feray, Valérie et al**
**Ipsilon**
**Le Centralis**
**63, avenue du Général Leclerc**
**92340 Bourg-la-Reine (FR)**

(56) References cited:
**WO-A1-03/098057**      **DE-A1-102007 052 241**
**GB-A- 516 450**      **JP-A- H0 699 099**
**JP-A- H1 162 939**      **JP-A- 2009 250 318**
**JP-A- 2009 250 318**      **JP-U- S4 812 458**
**JP-U- H04 105 618**      **JP-U- H04 105 618**
**US-A- 2 870 668**      **US-A- 2 870 668**
**US-A- 4 266 590**      **US-A- 5 672 037**

## Description

## Technical Field

The present invention relates to an earthing nut in which a conduction state can be achieved between the earthing nut and a bolt.

## Background Art

Patent Literature 1 discloses a known earthing nut including a deformation portion in which a screw portion is partially decreased in diameter by an external force. In the earthing nut, the deformation portion peels a coating film off from a bolt when being meshed with the bolt, thereby achieving a conduction state between the earthing nut and the bolt.

Citation List

Patent Literature

[Patent Literature 1] JP-A-2004-36682

Summary of Invention

Technical Problem

Incidentally, in such an earthing nut, a deformation portion is only partially provided in a screw portion. Therefore, it is unlikely to ensure that the screw portion is in contact with a bolt at a portion other than the deformation portion, resulting in a poor fastening force with respect to the bolt.

The deformation portion is formed by applying an external force onto a side surface of the screw portion, thereby being decreased in diameter. Therefore, the deformation portion is likely to have an irregular shape. Accordingly, there is a concern that fluctuation occurs in a conduction state between the deformation portion and the bolt, resulting in irregularity in an earthing performance of the earthing nut.

Furthermore, document JP H04-105618 U is directed to a nut to be fitted to a coated bolt able to discharge coating shavings obtained by peeling at the time of mating the bolt with the nut.

Document US 5,672,037 A relates to a male and female screw set wherein the male screw comprises at least a projecting part pressing against the flank plane of the female screw when the male and female screws are engaged.

Here, the present invention provides an earthing nut in which a fastening force is great and a conduction state can be reliably achieved with respect to a bolt. Solution to Problem

An earthing nut according to the present invention is defined by the features of claim 1.

In the earthing nut according to the present invention, when the pitch Pn of the screw thread is expressed as $Pn = P + \alpha$ by using the pitch P of the screw thread of the bolt, it is preferable that $\alpha$ satisfies $0 < \alpha < 0.1 \times P$.

In the earthing nut according to the present invention, when the angle $\theta$ of the screw thread is expressed as $\theta = 60 + \beta$, it is preferable that $\beta$ satisfies $0 < \beta \leq 10$.

In the earthing nut according to the present invention, when fastening torque acts on the earthing nut, it is preferable that a conduction state with respect to the bolt is ensured.

In the earthing nut according to the present invention, it is preferable that the cut-out is provided on at least one side in the axial direction.

In the earthing nut according to the present invention, it is preferable that the cut-out is provided on an insertion side of the bolt.

In the earthing nut according to the present invention, it is preferable that the cut-out is provided on both sides in the axial direction.

In the earthing nut according to the present invention, it is preferable that the earthing nut is a cap nut.

In the earthing nut according to the present invention, it is preferable that a sealing material filling a gap between the bolt and the screw hole is provided. Advantageous Effects of Invention

According to an earthing nut of the present invention, a fastening force is great, and a conduction state can be reliably achieved between the earthing nut and a bolt.

## Brief Description of Drawings

Fig. 1 is a top view of an earthing nut according to an embodiment.
Fig. 2 is a cross-sectional view taken along line II-II in Fig. 1.
Fig. 3 is a cross-sectional view of an engagement place of the earthing nut and a bolt.
Fig. 4 is a cross-sectional view of a fastening place showing an example of an attachment state of an electronic component obtained by the earthing nut and the bolt.
Fig. 5 is a graph showing relationships between fastening torque and a resistance value at the fastening place.
Fig. 6 is a cross-sectional view of the bolt according to a reference example.
Fig. 7 is a cross-sectional view illustrating a heading step of the earthing nut.
Fig. 8 is a cross-sectional view of the earthing nut according to a modification example.

**Description of Embodiments**

Hereinafter, an example of an embodiment of an earthing nut will be described with reference to the drawings.

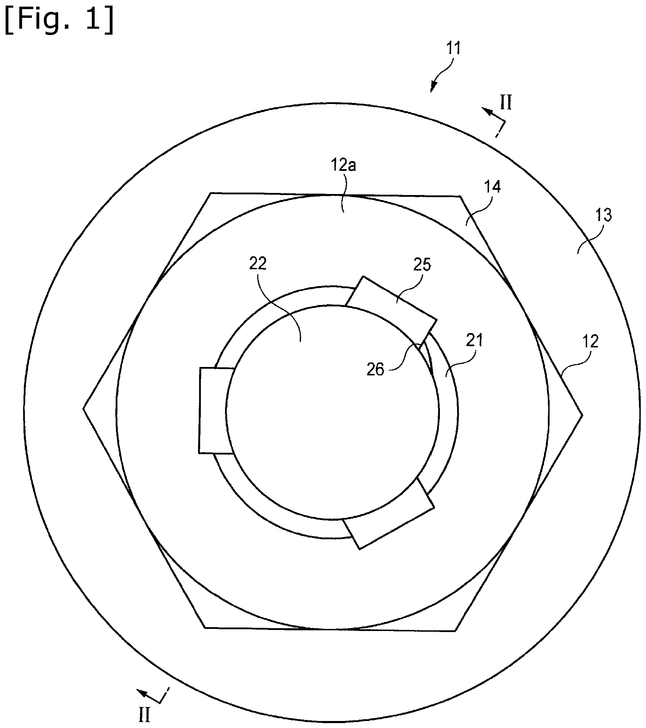

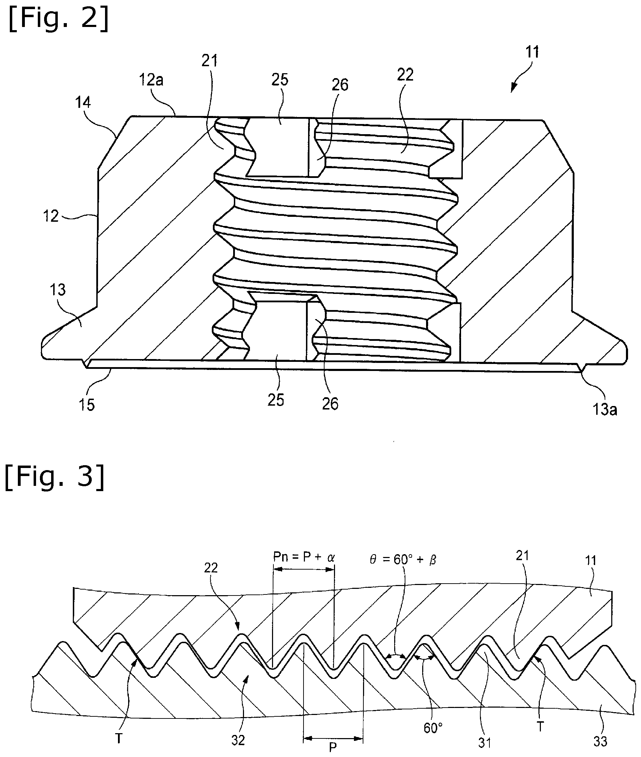

Fig. 1 is a top view of the earthing nut according to the present embodiment. Fig. 2 is a cross-sectional view taken along line II-II in Fig. 1. Fig. 3 is a cross-sectional view of an engagement place of the earthing nut and a bolt.

As shown in Figs. 1 and 2, an earthing nut 11 according to the present embodiment has a head portion 12 and a seat portion 13 which is provided at a lower portion of the head portion 12.

For example, the earthing nut 11 is used when performing earthing by attaching an electronic component to a vehicle body of an automobile. The earthing nut 11 functions to peel a rust preventive coating film off from the bolt when being screwed to the bolt, so as to ensure a favorable conduction state with respect to the bolt to be screwed.

As shown in Fig. 1, for example, the head portion 12 of the earthing nut 11 is formed to have a hexagonal shape in a planar view allowing a tool such as a wrench to be engaged therewith. The seat portion 13 is formed to have a disk shape in a planar view protruding further outward on an outer circumferential side than the head portion 12. As shown in Fig. 2, in the head portion 12, a chamfered portion 14 is formed at an edge portion of a top surface 12a which is a surface on a side opposite to the seat portion 13. The seat portion 13 has a downwardly protruding seat surface protrusion 15 annularly formed on a seat surface 13a which is a surface on a side opposite to the head portion 12.

In the earthing nut 11, a screw hole 22 having a screw thread 21 is formed at the center thereof. As shown in Fig. 3, a bolt 33 having a screw portion 32 in which a screw thread 31 is formed at a pitch P can engage the screw hole 22. In this case, the screw portion 32 of the bolt 33 is screwed into the screw hole 22 from an insertion side on the seat portion 13 side.

In all the screw threads 21 provided in the screw hole 22 of the earthing nut 11, the pitch $Pn$ is formed to be greater than the pitch P of the screw thread 31 of the screw portion 32 of the bolt 33. The pitch $Pn$ of the screw thread 21 of the earthing nut 11 is expressed as the following Expression (1) by using the pitch P of the screw thread 31 of the screw portion 32 of the bolt 33.

$$Pn = P + \alpha \ ... \ (1)$$

$\alpha$ in Expression (1) is a value satisfying the following Expression (2).

$$0 < \alpha < 0.1 \times P \ ... \ (2)$$

Regarding the specific measurements of the pitch P, for example, if the earthing nut 11 and the bolt 33 are M6 of JIS (Japanese Industrial Standard), P = 1.0 [mm]. In a case of M8 of JIS, P = 1.25 [mm].

As shown in Fig. 3, the earthing nut 11 is formed to have an angle $\theta$ [degrees] of the screw thread 21 greater than 60 degrees ($\theta > 60$). In other words, the angle $\theta$ of the screw thread 21 of the earthing nut 11 is expressed as the following Expression (3).

$$\theta = 60 + \beta \ ... \ (3)$$

$\beta$ in Expression (3) is a value satisfying the following Expression (4).

$$0 \leq \beta \leq 10 \ ... \ (4)$$

In JIS, angles of the screw threads of a bolt and a nut are 60 degrees.

As shown in Fig. 2, in the earthing nut 11 according to the present embodiment, cut-outs 25 extending in an axial direction are provided at portions of the screw hole 22. The cut-outs 25 are formed at six places in total, that is, two places on both sides of the bolt 33 in the axial direction of the screw hole 22 such as the insertion side (the lower portion in Fig. 2) and a counter-insertion side (the upper portion in Fig. 2) which is the opposite side of the insertion side, and three places (refer to Fig. 1) at set intervals in a circumferential direction. The number of the cut-outs 25 is not limited to the present example, and thus, any number of the cut-outs may be formed.

An end surface of the screw thread 21 facing the cut-out 25 forms a cutting edge 26 which can peel the coating film off from the bolt 33.

In the earthing nut 11 having the aforementioned configuration, the screw portion 32 of the bolt 33 is screwed into the screw hole 22, and thus, the earthing nut 11 and the bolt 33 are screwed together.

Here, in the earthing nut 11 according to the present embodiment, the pitch $Pn$ of the screw thread 21 is greater than the pitch P of the screw thread 31 of the bolt 33 by a predetermined measurement $\alpha$, that is, ($Pn = P + \alpha$). Then, when the earthing nut 11 and the bolt 33 engage each other, a difference ($Pn - P = \alpha$) between the pitches of the screw threads 21 and 31 is accumulated throughout the screw hole 22 and the screw portion 32 thereof in the axial direction.

The accumulated pitch acts on both engagement portions of the screw hole 22 and the screw portion 32 in the axial direction, thereby generating a high pressure contact portion T in which the screw thread 31 of the bolt 33 and the screw thread 21 of the earthing nut 11 come into contact with each other under a high pressure, on both sides thereof in the axial direction. Accordingly, if the screw portion 32 of the bolt 33 is screwed into the screw hole 22 of the earthing nut 11, it is possible to generate significant fastening force and prevailing torque by a high pressure contact portion T.

In the earthing nut 11, the cut-outs 25 are provided in the screw hole 22 on both sides in the axial direction, and cross sections of the screw thread 21 facing the cut-out 25 are the cutting edges 26. When screwing the screw portion 32 of the bolt 33, as described above, the high pressure contact portion T is generated on both the engagement portions of the screw hole 22 of the earthing nut 11 and the screw portion 32 of the bolt 33 in the axial direction. Then, the cutting edges 26 encroach on the screw thread 31 of the screw portion 32 of the bolt 33. In this state, if the screw portion 32 of the bolt 33 is screwed further into the screw hole 22 of the earthing nut 11, the cutting edges 26 peel the coating film off from the bolt 33. In this manner, as the coating film of the bolt 33 is peeled off, the earthing nut 11 and the bolt 33 can be reliably in a conduction state.

Even though the cut-outs 25 are formed in the screw hole 22, the cut-outs 25 are partially provided in the screw hole 22 on both sides in the axial direction, and thus, there is no impairment of strength of the earthing nut 11 compared to a case where the cut-outs 25 are provided to penetrate in the axial direction.

When peeling the coating film off from the bolt 33, shavings of the coating film are gathered in the cut-outs 25. Accordingly, the shavings peeled off from the coating film encroach on a gap between the screw thread 21 of the earthing nut 11 and the screw thread 31 of the bolt 33, thereby preventing the screw hole 22 of the earthing nut 11 and the screw portion 32 of the bolt 33 from being damaged.

In the earthing nut 11 according to the present embodiment, the cut-outs 25 are provided on both sides in the axial direction. Accordingly, on the insertion side of the bolt 33, the coating film on a flank surface on a counter-forward side can be peeled off from the bolt 33 by the cutting edges 26, and on the counter-insertion side of the bolt 33, the coating film on the flank surface on a forward side can be peeled off from the bolt 33 by the cutting edges 26. Accordingly, the coating films on the flank surface on both sides can be further peeled off, and thus, it is possible to reliably ensure a conduction state between the earthing nut 11 and the bolt 33.

If the bolt 33 engages the earthing nut 11, the coating film of the screw thread 31 of the bolt 33 is peeled off, thereby exposing a metal layer thereof. Therefore, in the earthing nut 11 according to the present embodiment, a sealing material 43 filling a gap between the screw hole 22 of the earthing nut 11 and the screw portion 32 of the bolt 33, for example, rubber or a resin is provided on a side opposite to the insertion side of the bolt 33. As the sealing material 43 fills the gap between the screw hole 22 of the earthing nut 11 and the screw portion 32 of the bolt 33, it is possible to prevent water infiltration through the gap, and it is possible to prevent rust by protecting a portion where the coating film is peeled off so as to expose metal.

Subsequently, descriptions will be given regarding a case of performing earthing by attaching an electronic component to a vehicle body using the earthing nut 11 according to the present embodiment.

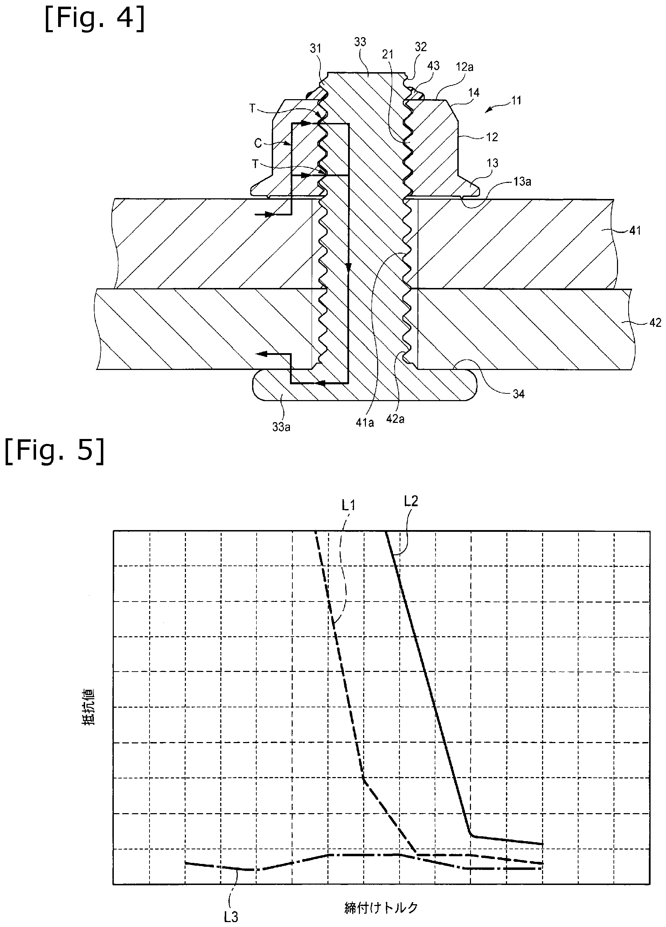

Fig. 4 is a cross-sectional view of a fastening place showing an example of an attachment state of an electronic component obtained by the earthing nut and the bolt.

As shown in Fig. 4, in order to attach an attachment piece 41 of an electronic component to a vehicle body 42 which is a component to be attached, the attachment piece 41 is superimposed on an attachment place of the vehicle body 42, thereby causing an attachment hole 41a of the attachment piece 41 and an attachment hole 42a of the vehicle body 42 to communicate with each other. Then, the bolt 33 is inserted through the attachment holes 41a and 42a which communicate with each other, and the screw portion 32 of the bolt 33 is screwed into the screw hole 22 of the earthing nut 11 so as to be engaged therewith.

In this manner, as the bolt 33 engages the earthing nut 11, it is possible to fasten and attach the attachment piece 41 to the vehicle body 42.

Then, when the bolt 33 engages the earthing nut 11, the cutting edges 26 of the earthing nut 11 peel the coating film of the screw thread 31 off from the bolt 33, thereby achieving a conduction state between the earthing nut 11 and the bolt 33. When the attachment piece 41 is fastened to the vehicle body 42 by the earthing nut 11 and the bolt 33, the seat surface protrusion 15 of the seat surface 13a of the earthing nut 11 encroaches on a surface of the attachment piece 41. Accordingly, the coating film provided on the surface of the attachment piece 41 is peeled off, thereby achieving a favorable conduction state between the attachment piece 41 and the earthing nut 11.

As the bolt 33 engages the earthing nut 11, a deviation (Pn - P = α) of the pitch throughout the entirety of the screw portion in which the screw threads 21 and 31 thereof mesh with each other is accumulated. Then, on both the engagement portions of the screw hole 22 and the screw portion 32 in the axial direction, the screw thread 31 of the bolt 33 and the screw thread 21 of the earthing nut 11 come into contact with each other under a high pressure. In other words, the high pressure contact portion T is generated at the engagement place of the screw hole 22 and the screw portion 32, and significant fastening force and prevailing torque are generated in the high pressure contact portion T. Therefore, a reliable conduction state between the attachment piece 41 and the vehicle body 42 is ensured without impairing fastening strength of the attachment piece 41 and the vehicle body 42.

If the earthing nut 11 is engaged with the bolt until the seat surface 13a of the earthing nut 11 comes into contact with the attachment piece 41, the seat surface protrusion 15 provided on the seat surface 13a of the earthing nut 11 comes into contact with the attachment piece 41. Then, the seat surface protrusion 15 peels off the coating film provided in the attachment piece 41, thereby ensuring a conduction state between the earthing nut 11 and the attachment piece 41.

In the present embodiment, a protrusion similar to the seat surface protrusion 15 of the earthing nut 11 is formed on a seat surface 34 which is a surface on the vehicle body 42 side in a head portion 33a of the bolt 33. When fastening the bolt 33, the protrusion is caused to encroach on the surface of the vehicle body 42, thereby peeling the coating film off from the surface of the vehicle body 42. Accordingly, a conduction state is achieved between the vehicle body 42 and the bolt 33. In addition, the head portion 33a of the bolt 33 may be previously fixed to the vehicle body 42 by welding and the like so as to achieve a conduction state.

Accordingly, the attachment piece 41 is in a conduction state through a conduction circuit C which is connected to the vehicle body 42 via the earthing nut 11 and the bolt 33. Thus, a favorable conduction state can be ensured between an electrical component having the attachment piece 41, and the vehicle body 42.

As described above, according to the earthing nut 11 of the present embodiment, the pitch of the screw thread 21 deviates from the screw thread 31 of the bolt 33 to be engaged, and an angle of the screw thread 21 is significant with respect to the screw thread 31 of the bolt 33. Accordingly, the high pressure contact portion T in which the screw threads 21 and 31 come into contact with each other under a high contact pressure can be acquired, and thus, a significant fastening force can be put into action. Since the cut-outs 25 are partially formed in the screw hole 22 on both sides in the axial direction, there is no impairment of strength of the screw thread 21.

The end surfaces of the screw thread 21 facing the cut-outs 25 are formed as the cutting edges 26, and the pitch of the screw thread 21 deviates from the bolt 33 to be engaged. Accordingly, the coating film can be reliably peeled off from the bolt 33, and thus, a conduction state with respect to the bolt 33 can be reliably ensured.

In such manners, it is possible to provide the earthing nut 11 in which a fastening force is great, and a conduction state with respect to the bolt 33 can be reliably achieved.

Particularly, according to the earthing nut 11 of the present embodiment, the screw thread 21 is formed so as to cause $\alpha$ to satisfy $0 < \alpha < 0.1 \times P$ when the pitch $Pn$ of the screw thread 21 is expressed as $Pn = P + \alpha$ by using the pitch P of the screw thread 31 of the bolt 33. Accordingly, when the earthing nut 11 is used, a conduction state with respect to the bolt 33 can be reliably ensured without impairing fastening strength.

The condition for $\alpha$ was obtained through an experiment. In the experiment, when $\alpha$ deviated from the range thereof, a fastening force with respect to the bolt 33 became excessively weak, or a conduction state with respect to the bolt 33 could not be ensured. The condition for $\alpha$ is preferably $0.005 \times P \leq \alpha \leq 0.08 \times P$, and more preferably $0.01 \times P \leq \alpha \leq 0.05 \times P$. When $\alpha$ was within the range thereof, characteristics such as fastening strength and a conduction state became more stable.

The screw thread 21 is formed so as to cause $\beta$ to satisfy $0 \leq \beta \leq 10$ when the angle $\theta$ [degree] of the screw thread 21 is expressed as $60 + \beta$. Accordingly, when the earthing nut 11 is used, it is possible to favorably peel the coating film of the screw thread 31 off from the bolt 33.

Here, when $\beta$ was greater than 10 degrees, the screw thread 31 of the bolt 33 was abraded during fastening. Since the coating film of the screw thread 31 was unlikely to be peeled off from the bolt 33 when $\beta$ was excessively small, the condition for $\beta$ is preferably $2.5 \leq \beta \leq 5$, and more preferably $3 \leq \beta \leq 4$. When $\beta$ was within the range thereof, even though attachment and detachment of the bolt 33 were repeated multiple times, stable prevailing torque could be acquired. When the coating film of the screw thread 31 of the bolt 33 is hard, it is preferable to set $\beta$ to be greater.

In the earthing nut 11 of the present embodiment in which the high pressure contact portion T can be acquired having the screw threads 21 and 31 firmly in contact with each other in the screw hole 22 on both sides in the axial direction, the cutting edges 26 are provided in the screw hole 22 on both sides thereof. Therefore, the cutting edges 26 can efficiently peel the coating film of the screw thread 31 off from the bolt 33. In this manner, if the cut-outs 25 are provided on the southern side of the screw hole 22 in the axial direction, the coating films on both surfaces, that is, the flank surface of the bolt 33 on the forward side and the flank surface thereof on the counter-forward side can be peeled off, and thus, it is possible to reliably achieve a conduction state.

In the present embodiment, the cut-outs 25 are formed in the screw hole 22 on both sides in the axial direction. However, it is acceptable as long as the cut-out 25 is provided in the screw hole 22 on at least one side in the axial direction. In this case as well, it is possible to peel the coating film of the screw thread 31 off from the engaged bolt 33 by the high pressure contact portion T in which the screw threads 21 and 31 are firmly in contact with each other.

Particularly, if the cut-out 25 is provided in the screw hole 22 on the insertion side of the bolt 33, a conduction state with respect to the bolt 33 is achieved on the insertion side of the bolt 33. Therefore, the conduction circuit C can be shortened with respect to the bolt 33, and thus, it is possible to lower a resistance value.

Differently from the earthing nut 11 according to the present embodiment described above, it is considerable to achieve a conduction state during fastening by forming a cut-out in a weld bolt attached onto the vehicle body side. However, in this case, if a cut-out is formed in the weld bolt, strength is degraded, and thus, there is a need to prepare two types of bolts, that is, the bolts for earthing and fastening, thereby resulting in poor workability in attaching the bolts for earthing and fastening to a vehicle body while discriminating the bolts therebetween. Therefore, as performed in the present embodiment, if the earthing nut 11 provided with the cut-out 25 is used, it is possible to adopt a single type of general-purpose weld bolt, thereby being preferable.

Subsequently, a relationship between fastening torque and the resistance value will be described.

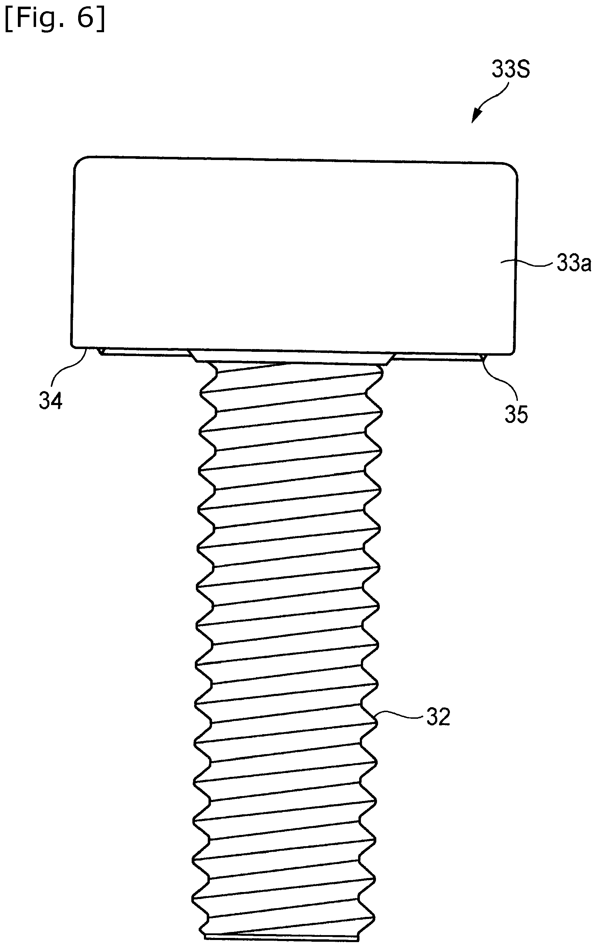

Fig. 5 is a graph showing relationships between fastening torque and the resistance value at the fastening place. Fig. 6 is a cross-sectional view of the bolt according to a reference example. In Fig. 5, the polygonal line L1 shows a relationship between fastening torque and the resistance value when using the earthing nut disclosed in PTL 1, the polygonal line L2 shows the same when using the bolt of the reference example, and the polygonal line L3 shows the same when using the earthing nut 11 of the present embodiment.

In the earthing nut (the earthing nut disclosed in PTL 1) in which the coating film of the bolt is peeled off by a deformation portion that is decreased in diameter by adding an external force to the screw portion, a fastening force cannot act in only the deformation portion which protrudes inwardly in a radial direction, and it is not possible to achieve a conduction state until the bolt reaches the deformation portion (refer to the polygonal line indicated by L1 in Fig. 5).

In other words, the earthing nut is unlikely to come into contact with the bolt other than in the deformation portion, and thus, it is difficult to actuate a significant fastening force. Therefore, this earthing nut cannot be employed for the purpose where a significant fastening force is required. Since the screw thread is unlikely to come into contact with a place where the coating film of the bolt is abraded, it is difficult to acquire a favorable conduction state.

As shown in Fig. 6, in a bolt 33S of the reference example in which a protrusion 35 similar to the seat surface protrusion 15 of the earthing nut 11 is formed on the seat surface 34 of the head portion 33a, unless the bolt 33S is screwed and inserted into a nut to a certain extent, the protrusion 35 of the seat surface 34 does not come into contact with the coating film on a surface of a component to be attached, and thus, the coating film cannot be peeled off.

Therefore, in such a bolt 33S, since a conduction state cannot be achieved unless fastening torque has a significant region to a certain extent, the resistance value is not lowered (refer to the polygonal line indicated by L2 in Fig. 5). Therefore, when it is desired to use a bolt at small fastening torque, the bolt 33S having this configuration cannot be employed. When fastening is insufficient, there is a concern that a conduction state cannot be achieved.

In contrast, in the earthing nut 11 according to the present embodiment, when fastening torque starts to be generated, the screw threads 21 and 31 come into contact with each other so as to start peeling the coating film of the screw thread 31 off from the bolt 33, and thus, a favorable conduction state can be achieved at low fastening torque (refer to the polygonal line indicated by L3 in Fig. 5). Therefore, in the earthing nut 11 according to the present embodiment, it is possible to achieve a favorable conduction state even though fastening torque fluctuates. For example, even when the earthing nut 11 has to be used at low fastening torque due to its own low strength, it is possible to expect a reliable conduction state.

As described above, since a conduction state with respect to the bolt 33 is ensured when fastening torque acts on the earthing nut 11, there is no need to put the earthing nut 11 to the bottom of the bolt 33. In other words, even though a contact length is short with respect to the screw portion 32 of the bolt 33, it is possible to reliably ensure a conduction state compared to the bolt 33S of the reference example.

Subsequently, a method of manufacturing the earthing nut 11 of the present embodiment will be described.

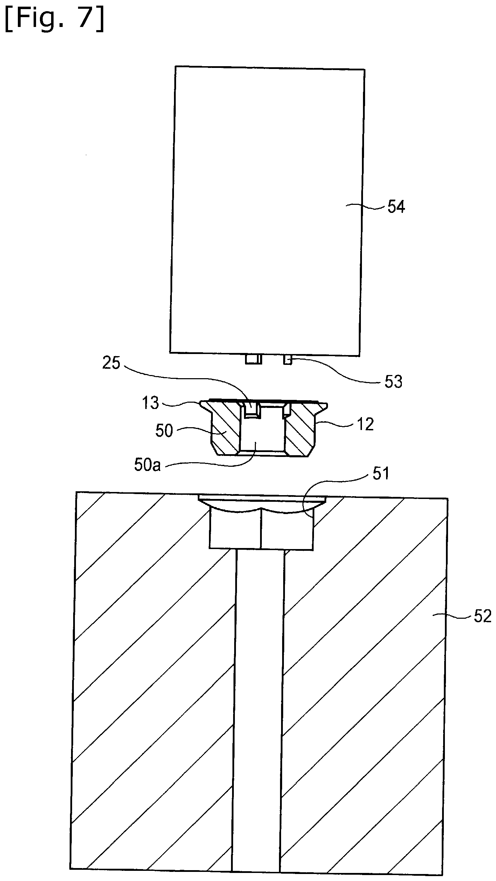

Fig. 7 is a cross-sectional view illustrating a heading step of the earthing nut.

Firstly, a metal wire rod which is a material of the earthing nut 11 is cut to a certain length, thereby obtaining an intermediate body (cutting step).

Subsequently, the intermediate body formed with the wire rod having a predetermined length is compressed in the axial direction, thereby molding the intermediate body in a nut shape (heading step). In the heading step, as shown in Fig. 7, a first die 52 having a nut molding concave portion 51, and a second die 54 having a cut-out forming protrusion 53 are used. Specifically, an intermediate body 50 is inserted into the nut molding concave portion 51 of the first die 52, and the second die 54 is pressed against the first die 52, thereby performing heading. Then, the nut molding concave portion 51 causes the outer shape of the intermediate body 50 to exhibit a shape of the earthing nut 11 having the head portion 12 and the seat portion 13. A hole portion 50a is formed at the center, and the cut-out 25 is formed at the end portion of the hole portion 50a in the axial direction.

Thereafter, the screw hole 22 having the screw thread 21 is formed on an inner circumferential surface of the hole portion 50a of the intermediate body 50 by performing tapping by using a tap, thereby completing the earthing nut 11 (tapping step).

Differently from the earthing nut 11 according to the embodiment described above, it is considerable to form a cut-out for abrading a coating surface of the screw thread of the nut, in the bolt. In order to manufacture the bolt having such a cut-out, it is typical that a wire rod is compressed in the axial direction so as to form the cut-out, and rolling dies provided with the screw thread are pressed against a surface of the intermediate body of the bolt formed with the wire rod in which the cut-out is formed, thereby obtaining the bolt having the screw portion in which the screw thread is formed. However, if the bolt having the cut-out is manufactured in this manner, the end surface of the screw thread facing the cut-out becomes blunt, and thus, the sharp cutting edge is not formed.

In contrast, according to the earthing nut 11 of the present embodiment, since the screw thread 21 is formed by using a tap after forming the cut-out 25, the cross section of the screw thread 21 facing the cut-out 25 becomes sharp. In this case, if a cutting tap is used as the tap, it is possible to more sharply form the cross section of the screw thread 21 facing the cut-out 25. Therefore, the coating film can be reliably peeled off from the bolt by the cutting edge 26 formed with the sharp cross section of the screw thread 21. Moreover, if a heading die configured to have the above-described first die 52 and second die 54 forming the cut-out 25 is prepared, the earthing nut 11 can be manufactured by applying existing method and facilities of manufacturing nuts, and thus, it is possible to provide the earthing nut 11 at an extremely low cost.

In the aforementioned embodiment, descriptions are given exemplifying the earthing nut 11 having the screw hole 22 which is vertically penetrated. However, the shape of the earthing nut 11 is not limited thereto.

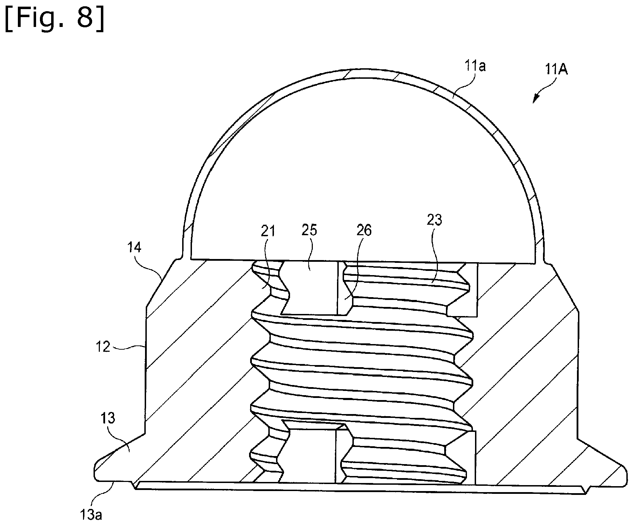

Fig. 8 is a cross-sectional view of the earthing nut according to a modification example.

Fig. 8 shows an earthing nut 11A configured to have the cap nut covered with a cap portion 11a of which a side opposite to the insertion side of the bolt has a hemispheric shape. In the case of the earthing nut 11A as well, regarding the entirety of the screw thread 21 provided in the screw hole 22, the pitch Pn of the screw thread 21 is greater than the pitch P of the screw thread 31 of the bolt 33, and the angle θ of the screw thread 21 is formed to be greater than 60 degrees. In the earthing nut 11A as well, the cut-outs 25 are formed in the screw hole 22 on both sides in the axial direction, and the cross section of the screw thread 21 facing the cut-out 25 is the sharp cutting edge 26.

Then, in the case of the earthing nut 11A as well, it is possible to reliably peel the coating film off from the bolt 33 by providing the cut-outs 25 so as to form the cutting edges 26 and causing the pitch of the screw thread 21 to deviate from the bolt 33 to be engaged. Accordingly, a conduction state with respect to the bolt 33 can be reliably ensured.

It is also possible to acquire the high pressure contact portion T in which a mutual contact force between the screw threads 21 and 31 increases in accordance with a deviation of the pitch of the screw thread 21 with respect to the bolt 33 to be engaged and the angle of the screw thread 21 is significant with respect to the bolt 33, and thus, a significant fastening force can act. Since the cut-outs 25 are partially formed in the screw hole 22 on both sides in the axial direction, there is no impairment of strength of the screw thread 21.

In such a manner, it is possible to provide the earthing nut 11A in which a fastening force is great, and a conduction state with respect to the bolt 33 can be reliably achieved.

Particularly, in the earthing nut 11A, the side opposite to the insertion side of the bolt 33 is covered with the cap portion 11a. Accordingly, it is possible to prevent water infiltration from the side opposite to the insertion side of the bolt 33 to the engagement place in the screw hole 22 with respect to the screw portion 32 of the bolt 33. Therefore, it is possible to cause the cap portion 11a to protect the portion where the coating film is peeled off by the cutting edge 26 so as to expose metal, thereby preventing generation of rust.

In the aforementioned embodiments, examples are described regarding the cases where the coating film of the screw thread 31 is peeled off from the bolt 33 by the cutting edge 26 when the bolt 33 engages the screw hole 22 of the earthing nuts 11 and 11A. However, the cutting edge 26 of the earthing nuts 11 and 11A can eliminate attached substances of the screw thread 31 of the bolt 33 in addition to the coating film. For example, there is a case where a sputtering material adheres unintentionally to the bolt or the nut when performing sputtering welding in the periphery of a bolt-fastening work site. In this case as well, according to the above-described earthing nuts 11 and 11A, the cutting edge 26 can also eliminate the adhered sputtering material by being engaged with the bolt 33.

The present application is based on Japanese Patent Application (Japanese Patent Application No. 2012-256373) filed on November 22, 2012.

Industrial Applicability

According to the present invention, it is possible to provide an earthing nut in which a fastening force is great and a conduction state can be reliably achieved with respect to a bolt.

Reference Signs List

11, 11A: EARTHING NUT; 21, 31: SCREW THREAD; 22: SCREW HOLE; 25: CUT-OUT; 26: Cutting edge; 33: BOLT; 43: SEALING MATERIAL; P, Pn: PITCH

**Claims**

1. An earthing nut (11) comprising:

a screw hole (22) that is intended to be engaged with a bolt (33) in which screw threads (31) are formed at a pitch P, and
wherein in a portion of the screw hole (22) in an axial direction, a cut-out (25) is provided extending in the axial direction, and an end surface of the screw thread (21) facing the cut-out (25) is formed as a cutting edge (26),

**characterized in that** in all screw threads (21) provided in the screw hole (22), a pitch Pn of the screw thread (21) is greater than the pitch P of the screw thread (31) of the bolt (33), and a thread angle θ of the screw thread (21) is formed to be greater than 60 degrees.

2. The earthing nut (11) according to Claim 1, wherein when the pitch Pn of the screw thread (21) is expressed as P + α by using the pitch P of the screw thread (31) of the bolt (33), α satisfies $0 < \alpha < 0.1 \times P$.

3. The earthing nut (11) according to Claim 1, wherein when the thread angle θ [degrees] of the screw thread (21) is expressed as 60 + β, β satisfies $0 < \beta \leq 10$.

4. The earthing nut (11) according to Claim 1, wherein when the earthing nut (11) is attached to a bolt (33) covered with a coating film, the earthing nut (11) is configured to peel the coating film off from the bolt (33) so as to ensure a conduction state with respect to the bolt (33).

5. The earthing nut (11) according to Claim 1, wherein the cut-out (25) is provided on at least one side in the axial direction.

6. The earthing nut (11) according to Claim 5, wherein the cut-out is provided on an insertion side of the bolt (33).

7. The earthing nut (11) according to Claim 5 or 6, wherein the cut-out (25) is provided on both sides in the axial direction.

8. The earthing nut (11) according to any one of Claims 1 to 7, wherein the earthing nut (11) is a cap nut.

9. The earthing nut (11) according to any one of Claims 1 to 7, wherein a sealing material filling a gap between the bolt (33) and the screw hole (22) is provided.

10. The earthing nut (11) according to any one of Claims 1 to 9, wherein when the earthing nut (11) is attached to the bolt (33) covered with a coating film, the cutting edge (26) of the screw thread (21) peels the coating film off from the bolt (33).

**Patentansprüche**

1. Erdungsmutter (11), umfassend:

ein Schraubenloch (22), das mit einem Bolzen (33) ineinandergreifen soll, in dem in einem Abstand P ein Schraubengewinde (31) ausgebildet ist,

wobei in einem Teil des Schraubenlochs (22) in axialer Richtung ein Ausschnitt (25) vorgesehen ist, der sich in axialer Richtung erstreckt, und eine dem Ausschnitt (25) zugewandte Stirnfläche des Schraubengewindes (21) als Schneidekante (26) ausgebildet ist,

**dadurch gekennzeichnet, dass** bei allen im Schraubenloch (22) vorgesehenen Gewinden (21) ein Abstand Pn des Gewindes (21) größer ist als der Abstand P des Gewindes (31) des Bolzens (33), und ein Gewindewinkel θ des Gewindes (21) größer 60 ° ausgebildet ist.

2. Erdungsmutter (11) nach Anspruch 1, wobei wenn der Abstand Pn des Gewindes (21) als P + α anhand des Abstands P des Gewindes (31) des Bolzens (33) ausgedrückt wird, α den Ausdruck $0 < \alpha < 0,1 \, xP$ erfüllt.

3. Erdungsmutter (11) nach Anspruch 1, wobei, wenn der Gewindewinkel θ [Grad] des Gewindes (21) als 60 + β ausgedrückt wird, β den Ausdruck $0 < \beta \geq 10$ erfüllt.

4. Erdungsmutter (11) nach Anspruch 1, wobei, wenn die Erdungsmutter (11) mit einem Bolzen (33) verbunden ist, der mit einer Beschichtungsfolie beschichtet ist, die Erdungsmutter (11) derart konfiguriert ist, dass sie die Beschichtungsfolie vom Bolzen (33) abzieht, um einen Leitungszustand bezüglich des Bolzens (33) zu gewährleisten.

5. Erdungsmutter (11) nach Anspruch 1, wobei der Ausschnitt (25) auf mindestens einer Seite in axialer Richtung vorgesehen ist.

6. Erdungsmutter (11) nach Anspruch 5, wobei der Ausschnitt auf einer Einführungsseite des Bolzens (33) vorgesehen ist.

7. Erdungsmutter (11) nach Anspruch 5 oder 6, wobei der Ausschnitt (25) auf beiden Seiten in axialer Richtung vorgesehen ist.

8. Erdungsmutter (11) nach einem der Ansprüche 1 - 7, wobei die Erdungsmutter (11) eine Überwurfmutter ist.

9. Erdungsmutter (11) nach einem der Ansprüche 1 - 7, wobei ein Dichtungsmaterial, das einen Spalt zwischen Bolzen (33) und Schraubenloch (22) füllt, vorgesehen ist.

10. Erdungsmutter (11) nach einem der Ansprüche 1 - 9,

wobei, wenn die Erdungsmutter (11) mit dem mit einer Beschichtungsfolie beschichteten Bolzen (33) verbunden ist, die Schneidekante (26) des Gewindes (21) die Beschichtungsfolie vom Bolzen (33) abzieht.

**Revendications**

1. Écrou de mise à la terre (11) comprenant :

   un trou de vis (22) qui est prévu pour être mis en prise avec un boulon (33) dans lequel des filetages de vis (31) sont formés à un pas P, et dans lequel, dans une partie du trou de vis (22) dans une direction axiale, on prévoit une découpe (25) s'étendant dans la direction axiale, et une surface d'extrémité du filetage de vis (21) faisant face à la découpe (25) est formée en tant que bord de coupe (26),
   **caractérisé en ce que** dans tous les filetages de vis (21) prévus dans le trou de vis (22), un pas Pn du filetage de vis (21) est supérieur au pas P du filetage de vis (31) du boulon (33), et un angle de filetage θ du filetage de vis (21) est formé pour être supérieur à 60 degrés.

2. Écrou de mise à la terre (11) selon la revendication 1, dans lequel lorsque le pas Pn du filetage de vis (21) est exprimé sous la forme P + α en utilisant le pas P du filetage de vis (31) du boulon (33), α satisfait $0 < α < 0,1 \times P$.

3. Écrou de mise à la terre (11) selon la revendication 1, dans lequel lorsque l'angle de filetage θ [degrés] du filetage de vis (21) est exprimé sous la forme 60 + β, β satisfait $0 < β ≤ 10$.

4. Écrou de mise à la terre (11) selon la revendication 1, dans lequel lorsque l'écrou de mise à la terre (11) est fixé à un boulon (33) recouvert avec un film de revêtement, l'écrou de mise à la terre (11) est configuré pour détacher le film de revêtement du boulon (33) afin de garantir un état de conduction par rapport au boulon (33).

5. Écrou de mise à la terre (11) selon la revendication 1, dans lequel la découpe (25) est prévue sur au moins un côté dans la direction axiale.

6. Écrou de mise à la terre (11) selon la revendication 5, dans lequel la découpe est prévue sur un côté d'insertion du boulon (33).

7. Écrou de mise à la terre (11) selon la revendication 5 ou 6, dans lequel la découpe (25) est prévue sur les deux côtés dans la direction axiale.

8. Écrou de mise à la terre (11) selon l'une quelconque des revendications 1 à 7, dans lequel l'écrou de mise à la terre (11) est un écrou borgne.

9. Écrou de mise à la terre (11) selon l'une quelconque des revendications 1 à 7, dans lequel un matériau d'étanchéité remplissant un espace entre le boulon (33) et le trou de vis (22) est prévu.

10. Écrou de mise à la terre (11) selon l'une quelconque des revendications 1 à 9, dans lequel lorsque l'écrou de mise à la terre (11) est fixé sur le boulon (33) recouvert avec un film de revêtement, le bord de coupe (26) du filetage de vis (21) détache le film de revêtement du boulon (33).

[Fig. 1]

[Fig. 2]

[Fig. 3]

[Fig. 4]

[Fig. 5]

[Fig. 6]

33S

33a

34

35

32

[Fig. 7]

[Fig. 8]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004036682 A
- JP H04105618 U
- US 5672037 A
- JP 2012256373 A